Europäisches Patentamt

European Patent Office

Office européen des brevets

(11) Veröffentlichungsnummer: **0 184 232**
A1

# (12) EUROPÄISCHE PATENTANMELDUNG

(21) Anmeldenummer: 85201732.6

(22) Anmeldetag: 24.10.85

(51) Int. Cl.⁴: **B 03 C 3/76**
H 02 K 49/10

(30) Priorität: 13.11.84 DE 3441375

(43) Veröffentlichungstag der Anmeldung:
11.06.86 Patentblatt 86/24

(84) Benannte Vertragsstaaten:
BE DE FR GB

(71) Anmelder: METALLGESELLSCHAFT AG
Reuterweg 14 Postfach 3724
D-6000 Frankfurt/M.1(DE)

(72) Erfinder: Hartmann, Wolfgang
Hinter den Obergärten 1
D-6000 Frankfurt am Main 60(DE)

(74) Vertreter: Rieger, Harald
Reuterweg 14
D-6000 Frankfurt a.M.(DE)

(54) Wellendurchführung für Antrieb einer Klopfeinrichtung eines elektrostatischen Staubabscheiders.

(57) Zur Übertragung des Drehmoments von einem außerhalb der Gehäusewandung eines elektrostatischen Staubabscheiders befindlichen Antrieb auf die innerhalb des Gehäuses befindliche Welle einer Klopfeinrichtung wird eine Vorrichtung vorgeschlagen, die durch eine mit der Gehäuswand 1 gasdicht verbundene, endseitig geschlossene Hülse 2 aus nicht magnetisierbarem Werkstoff, eine innerhalb der Hülse 2 drehbar gelagerte Welle 3 mit einem mit ihr fest verbundenen Magnetinnenring 4, einen außerhalb der Hülse 2 drehbar gelagerten Rohrabschnitt 6 mit einem mit ihm fest verbundenen Magnetaußenring 5 und einem ebenfalls fest verbundenen Antriebsrad 7 gekennzeichnet ist.

Mit dieser Vorrichtung kann ein Drehmoment "berührungslos" mittels magnetischer Kräfte durch die Wandung der Hülse übertragen werden, die ihrerseits den Innenraum des elektrostatischen Staubabscheiders gasdicht von der Umgebung abschließt. Damit werden alle Nachteile, die bei den üblicherweise verwendeten Stopfbuchs- oder Gleitringkonstruktionen auftretenden Nachteile vermieden.

./...

Fig.1

METALLGESELLSCHAFT AG
Reuterweg 14

6000 Frankfurt/Main 1

12. November 1984
MLK/OKU (1031?) 0184232

Prov.Nr. 9225 L

## Wellendurchführung

Die Erfindung bezieht sich auf eine Vorrichtung zur Übertragung des Drehmoments von einem außerhalb der Gehäusewandung eines elektrostatischen Staubabscheiders befindlichen Antrieb auf die innerhalb des Gehäuses befindliche Welle einer Klopfeinrichtung.

Zur Abreinigung des trocken abgeschiedenen Staubes von den Niederschlagsflächen sind in elektrostatischen Staubabscheidern in der Regel Klopfeinrichtungen vorgesehen, mittels derer an einer Welle gelenkig befestigte Fallhämmer periodisch angehoben und gegen Ambosse an den Niederschlagselektroden, Sprühelektroden oder deren Verbindungs- oder Aufhängevorrichtungen fallengelassen werden. Dazu wird die Welle entweder mit bestimmter, geringer Geschwindigkeit oder aber intermittierend gedreht, so daß die in bestimmten Winkelabstand zueinander angelenkten Hämmer nacheinander z.B. gegen die im Gasstrom nebeneinander angeordneten Elektroden schlagen. Infolge der an den Elektroden erzeugten Erschütterungen fällt der anhaftende Staub in mehr oder minder großen Fladen und im allgemeinen auch ohne große Wiederaufwirbelung von Staub, in die unter den Abscheidefeldern angeordneten Staubsammelbunker ab.

Es leuchtet ein, daß der Antrieb für die Welle normalerweise nicht innerhalb des Gehäuses eines elektrostatischen Staubabscheiders angeordnet werden kann, weil hier häufig die Temperatur zu hoch ist, die Funktionsfähigkeit durch Staubeinfall oder Aggressivität der Gase rasche verloren ginge und allfällige Reparatur und Wartungsarbeiten nur bei abgeschalteten Staubabscheider möglich wäre. Die Antriebe für die Wellen der Klopfeinrichtungen werden daher üblicherweise außerhalb des Gehäuses angeordnet.

Wenn der Druck innerhalb des Gehäuses nicht stark von dem normalen Umgebungsdruck abweicht und die zu reinigenden Gase ungefährlich sind, genügen für die Durchführung der Antriebswelle durch die Gehäusewand im allgemeinen übliche Stopfbuchsen oder dergleichen. Leckagen, die sich bei längerer Betriebszeit infolge Verschleiß zwangsläufig einstellen, können in diesen Fällen bis zu einem gewissen Grad zugelassen werden.

Wenn aber ein großer Druckunterschied zwischen innen und außen besteht oder wegen der Explosionsgefahr eine Zumischung von Luft zum Gas unbedingt vermieden werden muß oder aber das Gas auf keinen Fall austreten darf, weil es giftig oder schädlich ist, werden bekannte Gleitringkonstruktionen vorgesehen, die je nach Bedarf auch mit einem gasförmigen oder flüssigen Sperrmedium betrieben werden können.

Häufig sind derartige Wellendurchführungen aber nicht anwendbar, weil keine Sperrmittelleckagen zugelassen werden können, oder weil die Temperaturbelastung nicht beherrscht wird. In solchen und anderen Fällen werden derartige Wellendurchführungen als zu aufwendig, als zu wartungsbedürftig oder zu störanfällig angesehen.

Es besteht somit die Aufgabe, eine Vorrichtung der eingangs genannten Art zu schaffen, die die beschriebenen Nachteile nicht aufweist, die also insbesondere auch bei großen Druckunterschieden absolut dicht ist, die ausreichend betriebssicher ist, keinen hohen Wartungsaufwand erfordert und die schließlich nicht unangemessen teuer ist.

Diese Aufgabe wird erfindungsgemäß durch eine Vorrichtung gelöst, die gekennzeichnet ist durch eine mit der Gehäusewand gasdicht verbundene, endseitig geschlossene Hülse aus nicht magnetisierbarem Werkstoff, eine innerhalb der Hülse drehbar gelagerte Welle mit einem mit ihr fest verbundenen Magnetinnenring, einen außerhalb der Hülse drehbar gelagerten Rohrabschnitt mit einem mit ihm fest verbundenen Magnetaußenring und einem ebenfalls fest verbundenen Antriebsrad.

Die innerhalb der Hülse drehbar gelagerte Welle kann direkt mit der eigentlichen Klopfwelle verbunden werden, während das außenliegende Antriebsrad in geeigneter Weise mit dem eigentlichen Antriebsaggregat zu verbinden ist.

Bei der erfindungsgemäßen Vorrichtung wird das Drehmoment durch die gasdicht geschlossene Hülse von dem außenliegenden angetriebenen Rohrabschnitt auf die innenliegende Welle mittels Magnetkräften übertragen. Bei dieser Lösung kann praktisch absolute Gasdichtigkeit erreicht werden, jedenfalls die, die mit Flanschverbindungen erreichbar ist, wie sie zur Befestigung der Hülse an der Gehäusewand vorgesehen ist. Es ist klar, daß auf diese Weise jede technisch realisierbare Dichtigkeit erreicht werden kann. Somit entfallen alle Probleme, die sich bei Stopfbuchsabdichtungen und Gleitringkonstruktionen mit oder ohne Sperrmittel ergeben können. Die Magnetringe sind wartungsfrei und für die Lagerung der Welle können ebenfalls wartungsfreie, zumindest aber wartungsarme Lager vorgesehen werden. Alle außenliegenden Teile der Vorrichtung sind ebenso wie das eigentliche Antriebsaggregat leicht zugänglich und können daher auch während des Betriebes gut gewartet und im Bedarfsfall schnell repariert werden.

In weiterer Ausbildung der erfindungsgemäßen Vorrichtung
ist vorgesehen, daß der den Magnetinnenring sowie die
Innenlager enthaltende Teil der Hülse mittels einer Labyrinthdichtung gegen den Innenraum des elektrostatischen
Staubabscheiders abgedichtet ist. Ferner ist es möglich,
den freien Zwischenraum zwischen Hülse und Welle mit wärmedämmendem Filtermaterial auszufüllen.

Durch diese zusätzlichen Maßnahmen wird verhindert, daß
Staub bis zu den Lagern der Hülse eindringt und deren
Funktionsfähigkeit beeinträchtigt. Außerdem wird durch das
wärmedämmende Filtermaterial dafür gesorgt, daß die Temperaturbeanspruchung der Hülse in Grenzen bleibt.

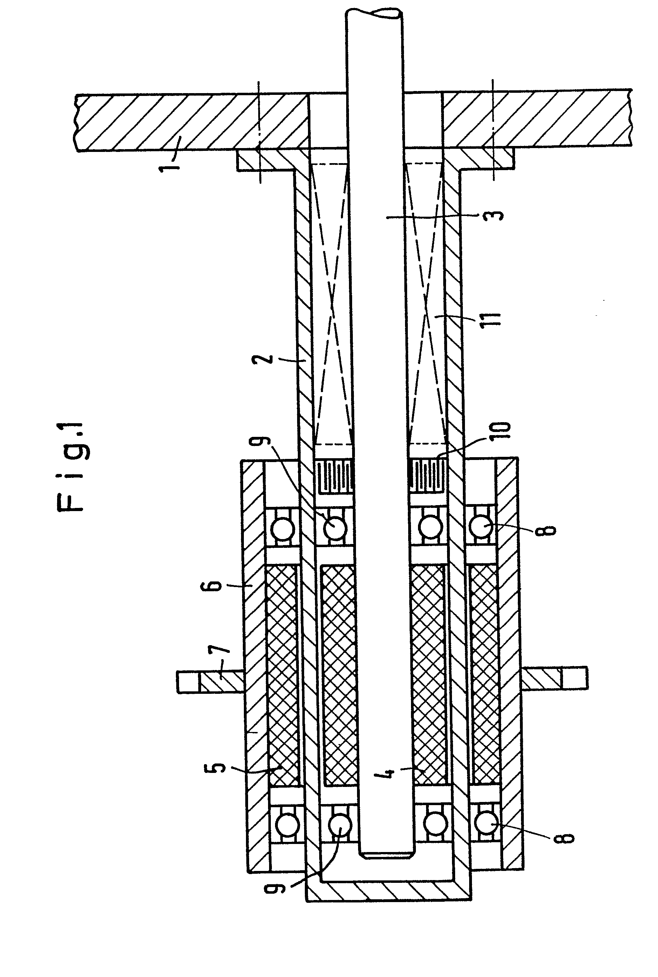

Weitere Einzelheiten und Vorteile der Vorrichtung werden
anhand des in Figur 1 dargestellten Ausführungsbeispiels
näher erläutert.

An der Gehäusewandung 1 eines elektrostatischen Staubabscheiders ist mittels Schrauben oder dergleichen eine
Hülse 2 befestigt. In der Hülse 2 ist eine sich in den
Staubabscheider hinein erstreckende Welle 3 mittels
Lager 9 drehbar angeordnet. Mit der Welle 3 ist drehfest
ein Magnetinnenring 4 verbunden. Außerhalb der Hülse ist
mittels Lager 8 ein Rohrabschnitt 6 drehbar gelagert, mit
dem ein Magnetaußenring 5 und ein Antriebsrad 6 drehfest
verbunden sind. Die Hülse 2 besteht aus nicht magnetisierbarem Material. Bei einer Drehung des Antriebsrades 7 werden der Rohrabschnitt 6 und der Magnetaußenring 5 mitgedreht und durch die Hülse 2 hindurch magnetisch ein Drehmoment auf den Magnetinnenring übertragen, der seinerseits
die Welle 3 mitdreht, wodurch die Drehbewegung durch die
gasdicht verschlossene Gehäusewand 1 auf die im Innern des
Staubabscheiders befindliche Klopfeinrichtung übertragen
wird.

- 5 -

0184232

Die Lager 9 sind durch eine Labyrinthdichtung 10 und wärmedämmendes Filtermaterial im freien Zwischenraum zwischen
der Hülse 2 und der Welle 3 gegen den Innenraum des Staubabscheiders abgedichtet. Damit ist eine allen eingangs genannten Anforderungen genügende Vorrichtung zur Übertragung des Drehmoments von einem außerhalb der Gehäusewandung eines elektrostatischen Staubabscheiders befindlichen
Antrieb auf die innerhalb des Gehäuses befindliche Welle
einer Klopfeinrichtung geschaffen.

<u>PATENTANSPRÜCHE</u>

1. Vorrichtung zur Übertragung des Drehmoments von einem
   außerhalb der Gehäusewandung eines elektrostatischen
   Staubabscheiders befindlichen Antriebs auf die innerhalb des Gehäuses befindliche Welle einer Klopfeinrichtung, <u>gekennzeichnet durch</u> eine mit der Gehäusewand (1)
   gasdicht verbundene, endseitig geschlossene Hülse (2)
   aus nicht magnetisierbarem Werkstoff, eine innerhalb
   der Hülse (2) drehbar gelagerte Welle (3) mit einem mit
   ihr festverbundenen Magnetinnenring (4), einen außerhalb der Hülse (2) drehbar gelagerten Rohrabschnitt (6)
   mit einem mit ihm festverbundenen Magnetaußenring (5)
   und einem ebenfalls festverbundenen Antriebsrad (7).

2. Vorrichtung nach Anspruch 1, <u>dadurch gekennzeichnet,</u>
   daß der den Magnetinnenring (4) sowie Innenlager (9)
   enthaltende Teil der Hülse (2) mittels Labyrinthdichtung (10) gegen den Innenraum des elektrostatischen
   Staubabscheiders abgedichtet ist.

3. Vorrichtung nach Anspruch 1 oder 2, <u>dadurch gekennzeichnet,</u> daß der freie Zwischenraum (11) zwischen
   Hülse (2) und Welle (3) mit wärmedämmendem Filtermaterial ausgefüllt ist.

# Fig.1

Europäisches
Patentamt

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int Cl 4) |
|---|---|---|---|
| Y | CH-A- 388 271 (AB SVENSKA FLÄKTFABRIKEN) <br> * Anspruch; Seite 1, Zeilen 1-49; Figur * | 1 | B 03 C 3/76 <br> H 02 K 49/10 |
| | --- | | |
| Y | FR-A-2 373 729 (AUTOCLAVE ENGINEERS INC.) <br> * Anspruch 1; Seite 2, Zeile 11 - Seite 3, Zeile 17; Figur 1 * | 1 | |
| | --- | | |
| A | GB-A- 230 841 (LODGE-COTTRELL LTD.) | | |
| | ----- | | |

RECHERCHIERTE
SACHGEBIETE (Int. Cl 4)

B 03 C
H 02 K

Der vorliegende Recherchenbericht wurde für alle Patentansprüche erstellt.

| Recherchenort <br> DEN HAAG | Abschlußdatum der Recherche <br> 24-01-1986 | Prüfer <br> DECANNIERE L.J. |
|---|---|---|